# EUROPEAN PATENT APPLICATION

(11) **EP 2 696 317 A1**
(43) Date of publication of application: **12.02.2014**
(21) Application number: 13179476.0
(22) Date of filing: 06.08.2013
(51) Int. Cl.: G06Q 20/02, G06Q 20/12, G06Q 20/38, G06Q 30/06

(54) **Payment system and clearinghouse of internet transactions**

(30) Priority: 06.08.2012 US 201213568103
(71) Applicant: Saf-T-Pay, Inc., Miami Beach, FL 33139 (US)
(72) Inventor: Montero, Manuel, Miami Beach, FL 33139 (US); Rolando, Antonio, Pembroke Pines, FL 33026 (US)
(74) Representative: Müller Schupfner & Partner

(57) **Abstract**

A method for allowing a customer to send payment to a merchant, comprising:
submitting order data from a customer computer to a merchant server;
sending merchant credentials and order data to a clearinghouse server;
sending a clearinghouse token URL to the merchant server;
redirecting a customer's web browser to a clearinghouse gateway using the token URL;
sending a financial institution token URL to the customer computer;
redirecting a customer's web browser to a financial institution gateway using the financial institution token URL;
sending the financial institution the financial institution token URL;
sending the financial institution token to the clearinghouse server to validate the financial institution token URL; and
sending a payment request to the financial institution to authorize the financial institution to authorize payment to the merchant.

## Description

This application is a continuation in part of US 11/528,555 filed September 28, 2006, which claims priority under 35 U.S.C. §119(e) to U.S. Patent Application Ser. No. 60/721,132 filed Sep. 28, 2005, which is incorporated herein in its entirety.

The present invention relates generally to a secure payment facilitator and clearinghouse benefiting or useful to, amongst others, online shoppers, online merchants, and banks. More specifically, the present invention relates to a system and method whereby online transactions may be completed in a secure manner without the need of a credit card and without having to share or divulge confidential or sensitive financial information to third parties.

Credit cards are generally the leading payment method for consumer purchases in the United States, both on- and off-line. From its very beginnings, internet commerce has been highly dependent upon U.S.-issued credit cards. The credit card infrastructure provided an established customer base large enough to feed e-commerce's exponential growth. As e-commerce expands into other markets, however, certain shoppers need alternative payment instruments. The various limits imposed by online commerce's dependence upon credit cards have now begun to restrict expansion of e-commerce--especially, for example, overseas.

The currently-available methods of online payment pose various problems to the consuming public. For instance, online transactions using credit card account information place the consumer at risk of identity theft or other unauthorized use of the account information. Furthermore, the consumer must share such confidential financial information with a third party, which likely maintains that information for various future unspecified uses. Also, many credit and debit cards are not accepted for use outside the country of issuance, particularly for online transactions.

There remains a need in the art, therefore, for an improved payment system and clearinghouse of internet transactions.
Disclosed is a system and method for allowing a customer to send payment to a merchant. The method or system may comprise: submitting order data from a customer computer to a merchant server. Merchant credentials and order data may be sent to a clearinghouse server. A clearinghouse token URL may be sent to the merchant server. A customer's web browser may be redirected to a clearinghouse gateway using the token URL. A financial institution token URL may be sent to the customer computer. A customer's web browser may be redirected to a financial institution gateway using the financial institution token URL. A financial institution may send the financial institution token URL. The financial institution token may be sent to the clearinghouse server to validate the financial institution token URL. A payment request may be sent to the financial institution to authorize the financial institution to authorize payment to the merchant.
(Item 1) A method for allowing a customer to send payment to a merchant, comprising:
   submitting order data from a customer computer to a merchant server;
   sending merchant credentials and order data to a clearinghouse server;
   sending a clearinghouse token URL to the merchant server;
   redirecting a customer's web browser to a clearinghouse gateway using the token URL;
   sending a financial institution token URL to the customer computer;
   redirecting a customer's web browser to a financial institution gateway using the financial institution token URL;
   sending the financial institution the financial institution token URL;
   sending the financial institution token to the clearinghouse server to validate the financial institution token URL; and
   sending a payment request to the financial institution to authorize the financial institution to authorize payment to the merchant.
(Item 2) The method of item 1 comprising sending a selected currency type and financial institution to the clearinghouse server.
(Item 3) The method of item 1 comprising:
   requesting the clearinghouse token URL and the financial institution token URL from a clearinghouse PATXI system;
   generating the clearinghouse token URL and the financial institution token URL; and
   sending the clearinghouse token URL and the financial token URL to the clearinghouse server.
(Item 4) The method of item 1 comprising sending, from the clearinghouse server, payment information to the financial institution.
(Item 5) The method of item 1 comprising:
   sending the financial institution login information; and
   displaying an account web page.
(Item 6) The method of item 1 comprising:
   validating the financial institution token URL at the clearinghouse server;
   sending payment confirmation to the clearinghouse from the financial institution;
   sending payment confirmation to the computer from the financial institution;
   sending a notification from the clearinghouse server to the merchant server that the clearinghouse server has received payment.
(Item 7) A system for allowing a customer to send payment to a merchant, the system comprising a plurality of modules and a plurality of computers each comprising tangible computer readable storage media and a processor configured to execute at least one of the plurality of the modules; the plurality of modules comprising:
   a customer order submission module configured to submit order data from a customer computer to a merchant server;
   a merchant order submission module configured to send merchant credentials and order data to a clearinghouse server;
   a clearinghouse token module configured to send a clearinghouse token URL to the merchant server;
   a clearinghouse redirection module configured to redirect a customer's web browser to a clearinghouse gateway using the token URL;
   a financial institution token module configured to send a financial institution token URL to the customer computer;
   a financial institution redirection module configured to redirect a customer's web browser to a financial institution gateway using the token URL;
   a customer token module configured to send a financial institution token URL to the financial institution;
   a financial institution token module configured to send the financial institution token to the clearinghouse server to validate the financial institution token URL; and
   a payment authorizer configured to send a payment request to the financial institution to authorize the financial institution to authorize payment to the merchant.
(Item 8) The system of item (Item 7) comprising:
   a currency selector configured to:
      allow a customer to select a form of currency; and
      send a selected currency type to the clearinghouse server;
   a financial institution selector configured to:
      allow a customer to select a financial institution; and
      send a selected financial institution to the clearinghouse server.
(Item 9) The system of item (Item 7) comprising a token processor configured to:
   generate a clearinghouse token URL and a financial institution token URL using a clearinghouse PATXI system; and
   send the clearinghouse token URL and the financial institution token URL to the customer computer.
(Item 10) The system of item (Item 7) comprising a payment information module configured to send, from the clearinghouse server, payment information to the financial institution.
(Item 11) The system of item (Item 7) comprising a login module configured to send the financial institution login information to the financial institution from the customer computer.
(Item 12) The system of item (Item 7) comprising a validation module configured to validate the financial institution token URL at the clearinghouse server.
(Item 13) The system of item (Item 7) comprising a payment notification module configured to:
   send payment confirmation to the clearinghouse from the financial institution; and
   send payment confirmation to the computer from the financial institution.
(Item 14) The system of item (Item 7) comprising a merchant notifier configured to send payment confirmation to the merchant server.
(Item 15) A system for allowing a customer to pay a merchant comprising:
   a customer computer comprising a processor and tangible computer readable storage media, the storage media comprising customer computer instructions executable by the processor for causing the computer to:
      submit order data;
      access a clearinghouse gateway using a clearinghouse token URL;
      send a financial institution token URL to a financial institution; and
      send a payment request;
   a merchant server comprising a processor and tangible computer readable storage media, the storage media comprising merchant server instructions executable by the processor for causing the server to:
      send merchant credentials and order information to a clearinghouse server;
      receive a clearinghouse token URL;
      redirect a customer's browser to a clearinghouse gateway using the clearinghouse token URL;
   the clearinghouse server comprising a processor and tangible computer readable storage media, the storage media comprising clearinghouse server instructions executable by the processor for causing the server to:
      send the clearinghouse token URL and the financial institution token URL;
      redirect the customer's browser to a financial institution gateway using the clearinghouse token URL;
      receive the financial institution token URL from the financial institution;
      validate that the financial institution token URL received by the clearinghouse is the same as the financial institution token sent by the clearinghouse server;
      send payment information to the financial institution;
      receive payment notification from the financial institution;
      send payment notification to the customer computer; and
      send payment notification to the merchant server; and
   the financial institution comprising a processor and tangible computer readable storage media, the storage media comprising financial institution instructions executable by the processor for causing the financial institution to:
      receive the financial institution token URL from the customer computer;
      send the financial institution token URL to the clearinghouse server;
      receive payment information from the clearinghouse server;
      receive a payment authorization from the customer computer; and
      send payment notification to clearinghouse server and customer computer.
(Item 16) The system of item 7 wherein the consumer computer instructions cause the computer to send a selected currency type and financial institution to the clearinghouse server.
(Item 17) The system of item 7 wherein the clearinghouse server instructions cause the server to generate the clearinghouse token URL and the financial institution token URL.
(Item 18) The system of item 7 wherein the clearinghouse server instructions cause the server to send, from the clearinghouse server, payment information to the financial institution.
(Item 19) A system of tangible computer readable storage media comprising:
   customer computer readable media for a customer computer comprising a processor, the media comprising customer computer instructions executable by the processor for causing the computer to:
      submit order data;
      access a clearinghouse gateway using a token URL;
      send a financial institution token URL to a financial institution; and
      send a payment request;
   merchant server computer readable media for a merchant server comprising a processor, the media comprising merchant server instructions executable by the processor for causing the server to:
      send merchant credentials and order information to a clearinghouse server;
      receive a clearinghouse token URL;
      redirect a customer's browser to a clearinghouse gateway using the clearinghouse token URL;
   clearinghouse server computer readable media for the clearinghouse server, the clearinghouse comprising a processor, the media comprising clearinghouse server instructions executable by the processor for causing the server to:
      send the clearinghouse token URL and the financial institution token URL;
      redirect the customer's browser to a financial institution gateway using the clearinghouse token URL;
      receive the financial institution token URL from the financial institution;
      validate that the financial institution token URL received by the clearinghouse server is the same as the financial institution token sent by the clearinghouse server;
      send payment information to the financial institution;
      receive payment notification from the financial institution;
      send payment notification to the customer computer; and
      send payment notification to the merchant server;
   financial institution computer readable media for the financial institution, the financial institution comprising a processor, the media comprising financial institution; instructions executable by the processor for causing the computer to:
      receive the financial institution token URL from the customer computer;
      send the financial institution token URL to the clearinghouse server;
      receive payment information from the clearinghouse server;
      receive a payment authorization from the customer computer; and
      send payment notification to clearinghouse server and customer computer.
(Item 20) The system of item 11 wherein the consumer computer instructions comprises sending a selected currency type and financial institution to the clearinghouse server.
(Item 21) The system of item 11 wherein the clearinghouse server instructions comprise generating the clearinghouse token URL and the financial institution token URL.
(Item 22) The system of item 11 wherein the clearinghouse server comprises sending, from the clearinghouse server, payment information to the financial institution.
(Item 23) A system for allowing a customer to pay for goods or services without sending any personal or financial information to a merchant except a shipping address; the system comprising a customer computer, e-commerce server, and a clearing house server; wherein:
   the customer computer is configured to send checkout information to the e-commerce server in a checkout process, the e-commerce server being controlled by the merchant;
   the e-commerce server configured to receive the checkout information;
   the e-commerce server further configured to generate payment information at the e-commerce server in response to the checkout information;
   the clearing house server configured to receive payment information wherein said payment information includes a cost of the goods or services;
   the clearing house server further configured generate a transaction ID at the clearing house server and send the transaction ID to the e-commerce server;
   the e-commerce server configured to transfer the transaction ID to the customer computer;
   the customer computer further configured to access a customer's bank server;
   the customer computer further configured to send an authorization request to the bank server to transfer funds from a customer account to a clearing house account;
   the clearing house server further configured to receive a first verification; said first verification indicating that the customer has authorized his or her bank to transfer funds from the customer account to the clearing house account;
   the clearing house server further configured to receive a deposit from the customer account;
   the e-commerce further configured to receive a second verification indicate that the customer has transferred the funds to the clearing house server;
   the clearing house server further configured to receive a notification from the merchant that goods have been shipped or the services performed; and
   the clearing house server configured to deposit a second amount of funds into an account controlled by the merchant.
(Item 24) The system of Item (Item 23), wherein the checkout process includes transferring a shipping address of the customer but does not include transferring any other personal or financial information from the customer computer to the e-commerce server.
(Item 25) The system of Item (Item 23), wherein the checkout process includes transferring a shipping address of the customer but does not include transferring a credit card number or bank account number.
(Item 26) The system of Item (Item 23), wherein the checkout process consists of transferring shipping information and identifying the goods or service for purchase.
(Item 27) The system of Item (Item 23), wherein the checkout process is not encrypted.
(Item 28) The system of Item (Item 23), wherein the payment information includes a selected currency.
(Item 29) The system of Item (Item 23), wherein the payment information does not include any private customer information.
(Item 30) The system of Item (Item 23), wherein said payment information includes a cost of the goods or services; wherein the payment information does not include credit card information or bank account number.
(Item 31) The system of Item (Item 23), wherein said first verification includes the transaction ID.
(Item 32) The system of Item (Item 23), wherein the second verification includes the transaction ID.
(Item 33) A system for allowing a customer to pay for goods or services without sending any personal or financial information to a merchant except a shipping address; said system comprising a customer computer, e-commerce server, and clearing house server; wherein:
   the customer computer configured to send checkout information to the e-commerce server in a checkout process, said e-commerce server being controlled by the merchant;
   the e-commerce server configured to generate payment information at the e-commerce server in response to the checkout information;
   the clearing house server configured to receive the payment information; wherein said payment information includes a cost of the goods or services;
   the clearing house server further configured to generate a transaction ID at the clearing house server and sending the transaction ID to the e-commerce server;
   the e-commerce server further configured to transfer the transaction ID to the customer computer;
   the clearing house server further configured to receive a notification that the customer has authorized his or her bank to transfer funds from his or her account to a clearing house account;
   the clearing house server further configured to withdraw a first amount of funds from the customer account and deposit the first amount of funds into the clearing house account;
   the clearing house server further configured to send a verification to the e-commerce server that the customer has transferred the funds to the clearing house server; and
   the clearing house server further configured to withdraw a second amount of funds from the clearing house account and deposit the second amount of funds into an account controlled by the merchant.
(Item 34) The system of Item (Item 33), wherein the clearing house server is further configured to receive a notification that goods have been shipped or the services performed from the e-commerce server.
(Item 35) A system for allowing a customer to pay for goods or services without sending any personal or financial information to a merchant except a shipping address; said system comprising a customer computer, e-commerce server, and clearing house server; wherein:
   the customer computer configured to send checkout information from a customer computer to an e-commerce server in a checkout process, said e-commerce server being controlled by the merchant; said checkout information containing only an identification of the goods or services desired and a shipping address of the customer;
   the e-commerce server configure to receive the checkout information;
   the e-commerce server further configured to generate payment information in response to the checkout information;
   the clearing house server configured to receive payment information; wherein said payment information includes a cost of the goods or services;
   the clearing house server further configured to generate a transaction ID and send the transaction ID to the e-commerce server;
   the customer computer further configured receive the transaction ID from the e-commerce server; and
   the clearing house server further configured to receive a transfer of funds from an account controlled by the customer and a notification that the customer has authorized his or her bank to transfer funds from his or her account.
(Item 36) The system of Item (Item 35) wherein the customer computer is further configured to send the transaction ID to the customer's bank.

Figure 1 is an illustrative flow chart of the customer computer, e-commerce server, clearinghouse, and customer's bank.

Figures 2A-2L are illustrative process flows.

Figure 3 is an illustrative flow chart of a customer computer, e-commerce server, clearinghouse, and financial institution.

Figure 4 is an illustrative schematic of components for a payment system.

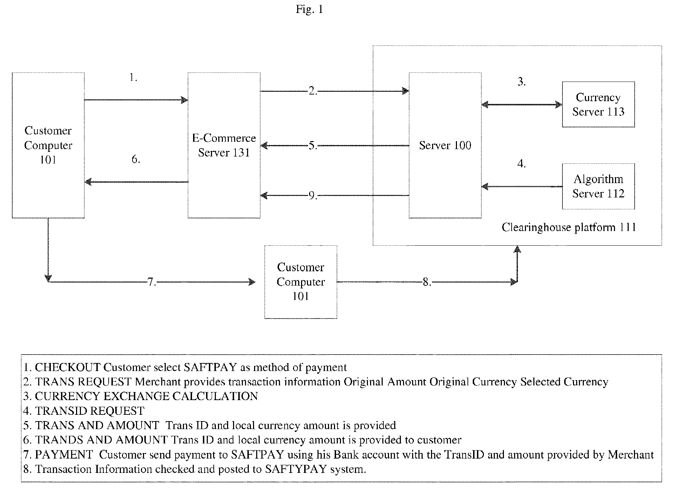

Figure 1 is an illustrative flow chart disclosing a clearinghouse server 100 for providing customers of affiliated banks, individuals or businesses (financial intuitions 105), in various countries to execute e-commerce transactions securely-through their own, trusted financial institutions. Such transactions may be conducted without the need to use a credit card or transmit sensitive financial information (such as a credit-card number or bank account number) to third parties.

In an exemplary configuration, a customer may use his or her customer computer 101 to access a clearinghouse server 131. The server 131 may be used to purchase or sell goods on the internet. To complete a purchase, the customer may select an icon on a merchant's checkout page to use the clearinghouse server 100 as a payment vehicle. To proceed with the transaction, the consumer may provide the merchant with consumer data such as a shipping address. In some configurations, only a shipping address is required to effect a transaction involving the purchase and delivery of goods, meaning that consumer does not need to provide financial or other sensitive information to the merchant server or the clearinghouse server. The merchant (or e-commerce) server 131 may be configured to send credentials and order information to the clearinghouse server 100.

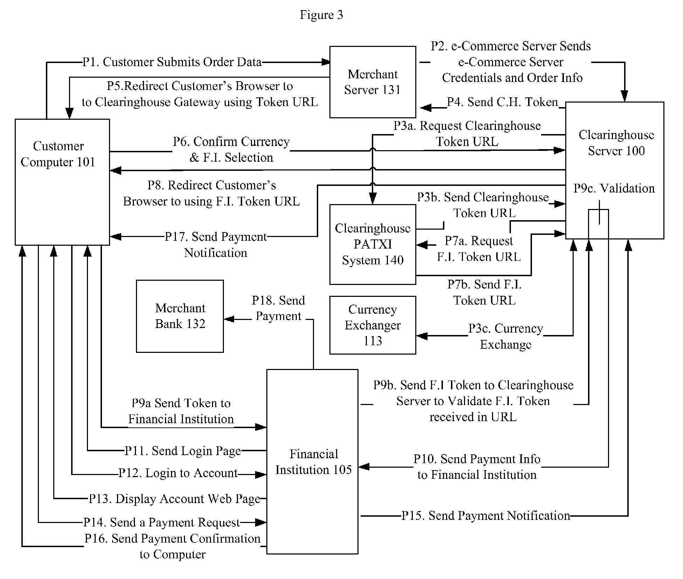

The clearinghouse server may analyze the data from the merchant. If the customer specifies a currency type, the server may covert the transaction amount to the desired currency. The clearinghouse server may create a clearinghouse token URL. The clearinghouse server may generate this URL internally or connect with another server such as the PATXI system (140, figure 3) to generate the URL. Similarly, in order to effect a currency conversion, the clearinghouse system may connect to a currency exchanger (113, figure 3) to obtain exchange-rate data.

The clearinghouse may transmit the clearinghouse token URL and the amount in the currency the consumer has selected for payment to the merchant server 131. The clearinghouse and the merchant e-commerce server may use web services protocols, such as XML-SOAP, UDDI, or WSDL.

The customer may also receive from the clearinghouse server, a financial institution token URL. The customer may connect his computer with his or her financial institution's 105, but conventional banking methods such as by telephone or personal visit to a bank may be used. The consumer may provide the financial institution token URL to the financial institution. The clearinghouse server may send an amount to pay to the customer. The financial institution 105 verifies the payment amount and transaction ID number with the clearinghouse server 100, informs the clearinghouse of the authorization, and then transfers the requested funds to the clearinghouse.

Once the clearinghouse receives the funds and authorization, clearinghouse server may send a notification to the online merchant that the payment was sent. In the case where shipping is used, shipping confirmation may be forwarded back to the clearinghouse and optionally to the consumer.

In another optional configuration, the merchant may provide an expiration date from the clearinghouse through the online merchant. The consumer must complete the transactions with his financial institution (bank) by the expiration date, or the transaction is void.

According to Figure 1, once the clearinghouse server (shown to include a web server 111, currency server 113, and algorithm server 112), receives an initial transactional information from the e-commerce server 131, the clearinghouse server may generate a transaction ID number and if applicable the equivalent amount in local currency. The clearinghouse server may interface with a customer financial institution to receive authorization to make the payment associated with the transaction ID number provided. Then the clearinghouse server may interfaces with the online merchant to confirm authorization, and again to receive shipping confirmation.

This configuration may provide the customer with several benefits. For example, unlike providing bank account or credit card information directly to a merchant website, the present invention allows for such payment while keeping this sensitive financial information confidential. Moreover, this configuration provides a solution to merchant's not accepting certain credit cards.

This invention also offers significant improvements over other current third-party payment systems, such as PayPal or escrow services. In order to use PayPal, a customer must create an account and provide personal and sensitive financial information, including bank account number(s) and/or credit card number(s), directly to PayPal. Similarly, escrow services often require credit card or bank account information, and often require significant effort to set up. In contrast, the present invention does not require such sensitive financial information to be shared with either the merchant or the clearinghouse. Moreover, according to a preferred embodiment, the customer need not even create any account with the clearinghouse server.

In Figure 1, arrow 1 represents the customer providing shipping information through an online merchant's check-out process. As shown by arrow 2, the merchant e-commerce server 131 transmits a transaction request to the to the clearinghouse platform 111 which comprises a clearinghouse server 100, algorithm server 112, and currency server 113. The transaction request may include a transaction amount, expiration date, and currency. In some configurations, no private customer information, such as credit card numbers are transferred. The clearinghouse server 100 may evaluate the information and decides whether a currency conversion is necessary. If so, the clearinghouse optionally interfaces with a currency server 113, as depicted by arrow 3, to determine the conversion rate. The clearinghouse server 100 may also interface with an algorithm server 112 to generate the transaction ID, shown by arrow 4. For added security, the algorithm server 112 may be hosted in a different server than the clearinghouse server 100. The algorithm server 112 may host the algorithm to generate and store the transactions ID's. After the transaction ID has been generated, the clearinghouse server 100 may transmit the transaction ID back along with the transaction amount in local currency, shown by arrow 5, to the merchant e-commerce server 131 which in turn transmits, shown by arrow 6, the transaction ID and amount in local currency back to the customer computer 101.

The customer may authorize the payment of the transaction with the customer's bank 105. As shown, this action is performed via the customer's computer 101 and an interface generated by a webserver associated with the financial institution 105. But in alternative embodiments, the customer may authorize payment though a branch office of the bank or a bank's telephonic service. Once payment is confirmed and authorized, including transaction information and amount to pay, by the customer through the computer 101 to the customer's bank 105 (depicted by arrow 7), the bank 105 interfaces with the clearinghouse server 100. As shown by arrow 8, the clearinghouse server 100 checks the transaction information against its records and accepts a funds transfer from the bank 105. Finally, the clearinghouse server 100 interfaces again with the merchant e-commerce server 131 to inform the merchant of payment, depicted by arrow 9.

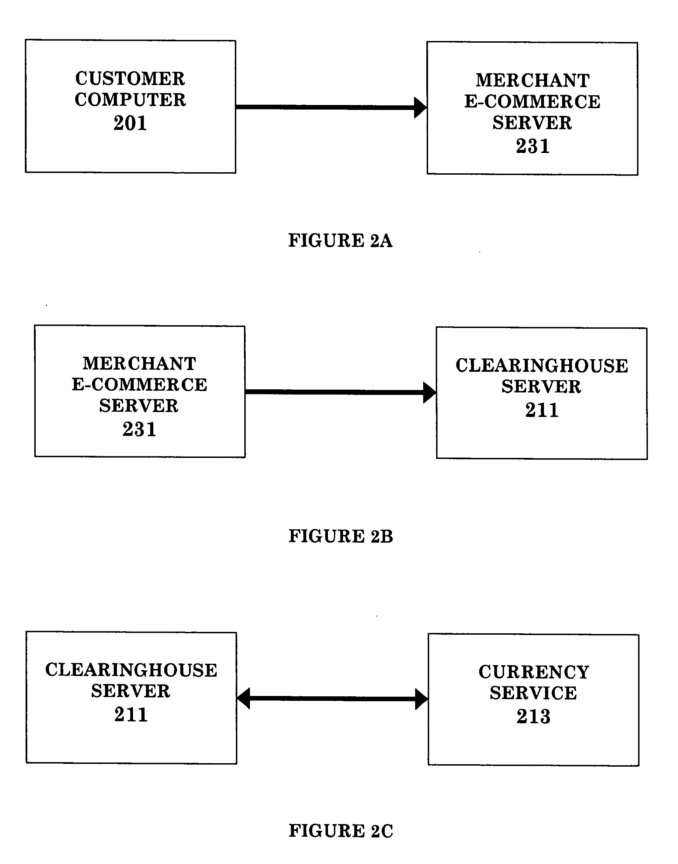

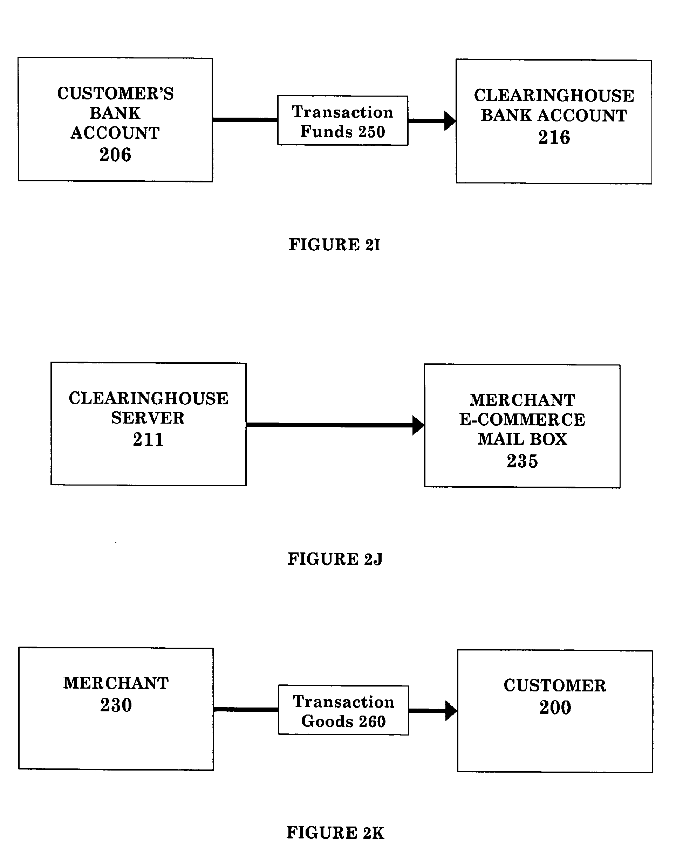

Turning to FIGS. 2A-2L, several step-by-step views of the system interactions according to an embodiment of the present invention can be seen. Specifically, FIG. 2A shows the interface between a customer's computer 201 and a merchant's e-commerce server 231. During the pre-transaction phase, the customer selects the items to purchase, selects the clearinghouse as the method of payment, and optionally indicates the preferred currency. This information is conveyed through the customer's computer 201 to the merchant's e-commerce server 231.

FIG. 2B shows the resulting interface between the merchant's e-commerce server 231 and the clearinghouse server 211. The merchant's e-commerce server 231 provides the relevant transaction information, which may include the transaction amount, expiration date, and currency, to the clearinghouse server 211 for processing. This interface uses standard web services protocols, including XML-SOAP.

FIG. 2C shows the optional two-way interface between the clearinghouse server 211 and a currency service 213, which provides currency-exchange information if necessary.

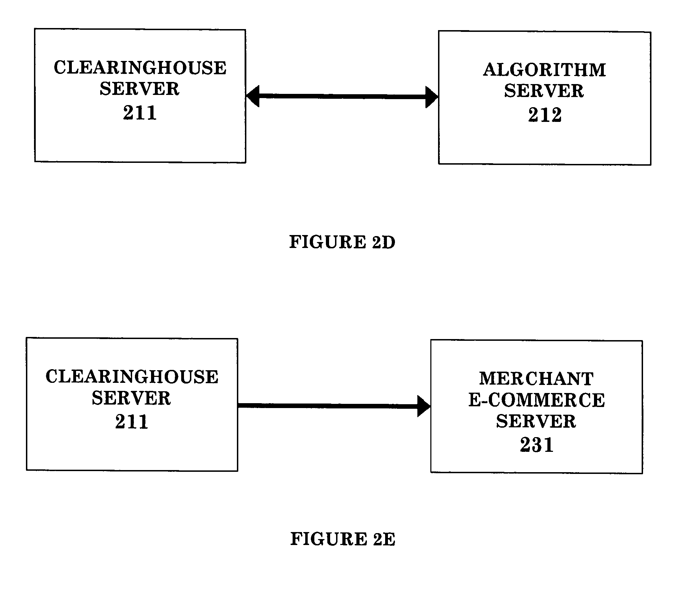

FIG. 2D shows the optional two-way interface between the clearinghouse server 211 and the algorithm server 212. For added security, the algorithm server 212 may be hosted in a different server than the clearinghouse server 211. The algorithm server 212 hosts the algorithm to generate and store the transactions ID's. The clearinghouse server 211 transmits the relevant transaction information to the algorithm server 212, which in turn transmits the transaction ID back to the clearinghouse server 211.

FIG. 2E shows the interface between the clearinghouse server 211 and the merchant e-commerce server 231. Once the transaction ID has been assigned, the clearinghouse server 211 provides that information as well as a local currency quote, if desired, to the merchant e-commerce server 231. This interface also uses standard web services protocols, including XML-SOAP.

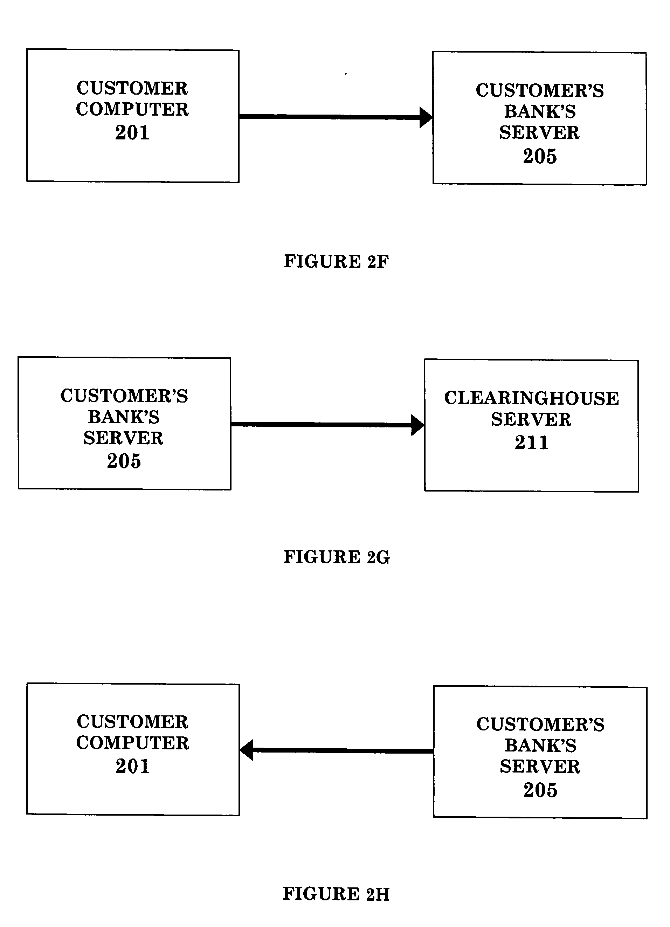

FIG. 2F begins to show the sequence of steps and interfaces during the transaction phase. In this embodiment, the transaction authorization from the customer is conducted electronically. The customer computer 201 interfaces with the customer's bank's server 205, and provides the transaction ID and transaction amount, and authorizes payment.

FIG. 2G shows the interface between the customer's bank's server 205 and the clearinghouse server 211, through which the bank's server 205 verifies that the authorization for payment has been given by the customer. In doing so, the bank's server 205 also verifies the validity of the transaction ID number. This interface uses standard web services protocols.

FIG. 2H shows that once the bank's server 205 verifies the validity of the transaction ID number and verifies that authorization has been given, the bank informs the customer of the same. In this embodiment, the bank's server 205 conveys that information through an interface with the customer computer 201.

FIG. 21 shows the final step in the transaction phase. The transaction funds 250 are withdrawn from the customer's bank account 206 and deposited into the clearinghouse bank account 216. Preferably, the transfer of funds is accomplished through a wire transfer or other electronic debit from the customer's bank account 206.

FIG. 2J begins to show the sequence of steps and interfaces during the clearing and delivery phase. Once the transaction funds 250 have been deposited into the clearinghouse bank account 216, the clearinghouse server 211 informs the merchant that a transaction has been completed, by one of several possible methods, including the following:

POST Notification, by connecting directly to the Merchants Server and sending the data informing a transaction has been paid.

EMAIL Notification, sends an electronic message to the merchant e-commerce mail box 235, confirming that the transaction has been paid.

FIG. 2K shows the shipment of the transaction goods 260. Once the merchant 230 matches the paid transaction ID with the existing transaction in its database, the merchant 230 ships the transaction goods 260 (or performs the purchased services) to the customer 200.

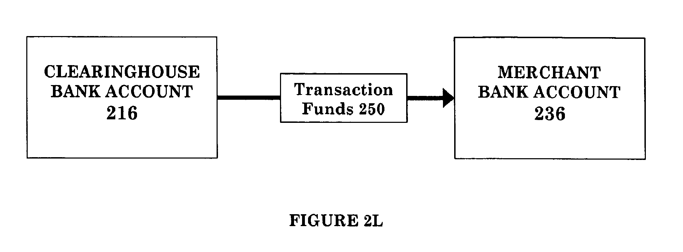

FIG. 2L shows the settlement phase of the overall transaction. Once the transaction goods 260 have been shipped, the merchant 230 notifies the clearinghouse and optimally provides a proof-of-delivery. Thereafter, the net transaction funds 251 are withdrawn from the clearinghouse bank account 216 and deposited in the merchant bank account 236. Any clearinghouse fees or commissions have been subtracted from the transaction funds 250 to create the net transactions funds 251.

As a result of using the clearinghouse of the present invention, the consumer can make a purchase from a retailer without needing to provide any personal information except a shipping address. The consumer instructs his or her bank to pay for the purchase by giving the bank the transaction ID number he or she received from the merchant. The consumer's bank then pays the clearinghouse, which then guarantees payment to the merchant. The merchant then ships the merchandise to the specified address provided by the consumer at the time of purchase. On receiving confirmation of delivery, the clearinghouse transfers the payment to the merchant's bank account.

Figure 3 shows another illustrative configuration. Although the processes are numbered sequentially, the illustrative process may be performed in differing orders and one or more of the processes may be omitted or repeated depending on the configuration. For example, customer computer 101 (operated by a customer) may send P1 an order for goods and/or services to an e-commerce server (a merchant server/computer) 131. An order may include data such as Order Number, Order Currency and Amount, Order Details, Promotional Codes, Expiration Time, ecommerce Transaction OK URL and ecommerce Transaction ERROR URL, among others. The e-commerce server 131 may send P2 merchant/e-commerce credentials and a copy of the order information received from the customer computer 101 to clearinghouse server 100. The clearinghouse server 100 may request P3a a clearinghouse token URL from a clearinghouse PATXI System 140. A clearinghouse token URL may be a Web URL that includes a unique encrypted transaction identifier. A PATXI system 140 may be a Proprietary Algorithm Transaction Identifier Generator Server. The PATXI system P3b may then send the token URL to the clearinghouse server.

Once the clearinghouse server 100 has the clearinghouse token URL, it may send P4 the clearing house (C.H.) token URL to the e-commerce server. The e-commerce server 131, using the token URL, may redirect P5 the customer's web browser (or other internet connection software) to a gateway of the clearinghouse. A gateway may be a proprietary Web Application configured to allows customers to select their local currency and bank and generate a new token URL to allow a bank to retrieve transaction information from the clearinghouse server. The customer computer may select the currency for payment using a currency selector provided in the gateway of the clearinghouse server. Similarly, the customer computer may select a financial institution for payment using a financial institution selector provided in the gateway of the clearinghouse server. The selections made via the customer computer may be sent P6 to the e-commerce server. The selections of the customer may be "remembered" by the e-commerce server, and pre-selected for the customer the next time he or she accesses the clearinghouse gateway.

The clearinghouse server 100 may then request P7a a financial institution token from the clearinghouse PAXTI system 140. The PAXTI system may generate this token and provide P7b it to the clearinghouse server. The clearinghouse server may then redirect the browser of the customer computer to point to the financial institution's gateway using the financial institution token URL. At such point, the customer's computer may send P9a the financial institution token to the financial institution. Once received, the financial institution 105 may then send P9b the token to the clearinghouse server to validate the token received in the URL. The clearinghouse server may execute P9c a validation module to determine whether the received token URL is an authorized token (i.e. one generated by the clearinghouse PATXI system 140 for this exchange between the customer and merchant.) The validation module may perform the following processes. Is token valid? Is token expired? Is token used previously? If the validation module authorizes the transaction, the clearinghouse server sends the payment information to the financial institution 105. If the validation module determines the token is not valid (expired, fraudulent, etc.), the clearinghouse server may send a declination message to the financial institution. From that point, the financial institution may relay a message to the customer computer via an appropriate webpage that the attempted token URL was invalid.

If the token is valid (P10), the clearinghouse server may send payment information to the financial institution; payment information which may include order information (order number, currency and amount of the purchase, product details, etc) merchant name, tracking code, transaction OK URL, transaction error URL (these URLS are clearinghouse URLs that the clearinghouse server may send to the financial institution to redirect the customer's institution to the merchant), etc. The financial institution may send P11 a login page to the customer computer 101. The customer computer may then provide P12 login credentials to the financial institution. The financial institution may then validate the login credentials, access the appropriate account records, and generate a webpage that it may send P13 to the customer computer, the webpage displaying account information. The customer computer 101 may then confirm payment for the transaction, and send the financial institution a request to send payment P14. The financial institution then can send P15 a payment notification to the clearinghouse server 100 and send P16 a payment confirmation to the customer computer. The clearinghouse server 100 may then send payment notification to the merchant server.

When the customer completes the payment, he or she can navigate back to the e-commerce server by using the token OK URL (if the payment was successful) or transaction ERROR URL (if the payment failed for any reason) that can be showed to customers in a button in the financial institution.

In terms of actually sending the money, the customer financial institution may send P18 the amount indicated in the order data to the merchant bank or financial institution using known methods. The merchant bank may send the merchant a notification, and the merchant bank 132 and customer bank 105 may be the same or different entities.

In some of configurations of this system, the only information the customer provides to the e-commerce server is billing & shipping information. In some configurations, the customer does not need to send any financial information to the e-commerce server. In some configurations, the only information the customer provides to the clearinghouse server is the customer's email and phone number.

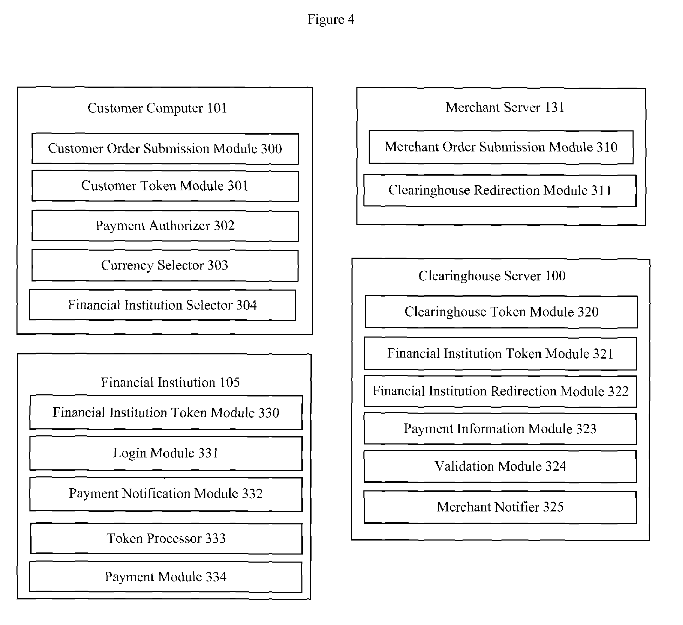

Figure 4 illustrates several components, notably the customer computer 101, merchant server 131, financial institution 105, and clearinghouse server 100. Each of the components may comprise one or more modules stored on tangible computer readable storage media. The modules may be configured to cause a processor in the component to perform a specific instruction. For example, the customer computer may comprise customer computer readable storage media for instructing the processor to perform certain customer computer instructions.

The customer computer may comprise: a customer order submission module 300 for submitting order data, a customer token module 301 for accessing a clearinghouse gateway using a token URL, a payment authorizer 302 for sending a payment request to a financial institution, a currency selector 303 for allowing a customer to select a currency in which to pay the merchant, and a financial institution selector 304 for allowing a customer to select which financial institution to use to make a payment.

The merchant or e-commerce server 131 may comprise a merchant order submission module 310 configured to send merchant credentials and order information to a clearinghouse server and receive a clearinghouse token URL from the clearinghouse. A clearinghouse redirection module 311 may be configured to redirect a customer's browser to a clearinghouse gateway using the clearinghouse token URL.

The clearinghouse server 100 may comprise a clearinghouse token module 320 for sending a clearinghouse token URL to the merchant server, and a financial institution token module 321 for sending a financial institution token URL to the customer computer. Additionally included in the clearinghouse server 100 may be a clearinghouse redirection module 322 configured to redirect a customer's browser to a clearinghouse gateway using the clearinghouse token URL, a financial institution token module 322 configured to send a financial institution token URL to the customer computer from the clearinghouse server, and a financial institution redirection module 323 configured to redirect the customer web browser or other internet software to a gateway associated with the customer selected financial institution (or other financial institution associated with the sent financial institution token URL). The server 100 may also comprise a payment information module 324 configured to send payment to financial institution, a validation module 325 configured to validate a financial institution token URL received from the financial institution, and a merchant notifier 326 configured to notify a merchant server that payment has been transferred.

The financial institution 105 may comprise one or more servers with instructions stored on computer readable storage media for executing modules and/ or instructions. For example, financial institution 105 may comprise a financial institution token module 330 for sending a financial institution token URL to the clearinghouse server so that the clearinghouse server may validate financial institution token URL. The financial institution may comprise a login module 331 for providing a customer computer with a login interface. The login interface may be a website requesting the customer's login credentials. A payment notification module 332 may comprise instructions to send notifications to the customer computer 101, clearinghouse server 100, and/or the merchant server 131. The financial institution 105 may also comprise a payment module for delivering payment to a merchant's bank.

Implementations of the subject matter and the operations described in this specification can be implemented in digital electronic circuitry, or in computer software embodied on a tangible medium, firmware, or hardware, including the structures disclosed in this specification and their structural equivalents, or in combinations of one or more of them. Implementations of the subject matter described in this specification can be implemented as one or more computer programs embodied on a tangible medium, i.e., one or more modules of computer program instructions, encoded on one or more computer storage media for execution by, or to control the operation of, a data processing apparatus. A computer storage medium can be, or be included in, a computer-readable storage device, a computer-readable storage substrate, a random or serial access memory array or device, or a combination of one or more of them. The computer storage medium can also be, or be included in, one or more separate components or media (e.g., multiple CDs, disks, or other storage devices). The computer storage medium may be tangible and non-transitory.

The operations described in this specification can be implemented as operations performed by a data processing apparatus on data stored on one or more computer-readable storage devices or received from other sources. The term "client or "server" include all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code embodied on a tangible medium that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, implementations of the subject matter described in this specification can be implemented on a computer having a display device, e.g., a CRT (cathode ray tube), LCD (liquid crystal display), OLED (organic light emitting diode), TFT (thin-film transistor), plasma, other flexible configuration, or any other monitor for displaying information to the user and a keyboard, a pointing device, e.g., a mouse, trackball, etc., or a touch screen, touch pad, etc., by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending webpages to a web browser on a user's client device in response to requests received from the web browser.

Implementations of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The features disclosed herein may be implemented on a smart television module (or connected television module, hybrid television module, etc.), which may include a processing circuit configured to integrate Internet connectivity with more traditional television programming sources (e.g., received via cable, satellite, over-the-air, or other signals). The smart television module may be physically incorporated into a television set or may include a separate device such as a set-top box, Blu-ray or other digital media player, game console, hotel television system, and other companion device. A smart television module may be configured to allow viewers to search and find videos, movies, photos and other content on the web, on a local cable TV channel, on a satellite TV channel, or stored on a local hard drive. A set-top box (STB) or set-top unit (STU) may include an information appliance device that may contain a tuner and connect to a television set and an external source of signal, turning the signal into content which is then displayed on the television screen or other display device. A smart television module may be configured to provide a home screen or top level screen including icons for a plurality of different applications, such as a web browser and a plurality of streaming media services, a connected cable or satellite media source, other web "channels", etc. The smart television module may further be configured to provide an electronic programming guide to the user. A companion application to the smart television module may be operable on a mobile computing device to provide additional information about available programs to a user, to allow the user to control the smart television module, etc. In alternate embodiments, the features may be implemented on a laptop computer or other personal computer, a smartphone, other mobile phone, handheld computer, a tablet PC, or other computing device.

While this specification contains many specific implementation details, these should not be construed as limitations on the scope of any inventions or of what may be claimed, but rather as descriptions of features specific to particular implementations of particular inventions. Certain features that are described in this specification in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

Thus, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking or parallel processing may be utilized.

## Claims

1. A method for allowing a customer to send payment to a merchant, comprising:
submitting order data from a customer computer to a merchant server;
sending merchant credentials and order data to a clearinghouse server;
sending a clearinghouse token URL to the merchant server;
redirecting a customer's web browser to a clearinghouse gateway using the token URL;
sending a financial institution token URL to the customer computer;
redirecting a customer's web browser to a financial institution gateway using the financial institution token URL;
sending the financial institution the financial institution token URL;
sending the financial institution token to the clearinghouse server to validate the financial institution token URL; and
sending a payment request to the financial institution to authorize the financial institution to authorize payment to the merchant.

2. The method of claim 1 comprising sending a selected currency type and financial institution to the clearinghouse server.

3. The method of claim 1 or 2 comprising:
requesting the clearinghouse token URL and the financial institution token URL from a clearinghouse PATXI system;
generating the clearinghouse token URL and the financial institution token URL; and
sending the clearinghouse token URL and the financial token URL to the clearinghouse server.

4. The method of one of the proceeding claims comprising sending, from the clearinghouse server, payment information to the financial institution.

5. The method of one of the proceeding claims comprising:
sending the financial institution login information; and
displaying an account web page.

6. The method of one of the proceeding claims comprising:
validating the financial institution token URL at the clearinghouse server;
sending payment confirmation to the clearinghouse from the financial institution;
sending payment confirmation to the computer from the financial institution;
sending a notification from the clearinghouse server to the merchant server that the clearinghouse server has received payment.

7. A system for allowing a customer to pay a merchant comprising:
a customer computer comprising a processor and tangible computer readable storage media, the storage media comprising customer computer instructions executable by the processor for causing the computer to:
submit order data;
access a clearinghouse gateway using a clearinghouse token URL;
send a financial institution token URL to a financial institution; and
send a payment request;
a merchant server comprising a processor and tangible computer readable storage media, the storage media comprising merchant server instructions executable by the processor for causing the server to:
send merchant credentials and order information to a clearinghouse server;
receive a clearinghouse token URL;
redirect a customer's browser to a clearinghouse gateway using
the clearinghouse token URL;
the clearinghouse server comprising a processor and tangible computer readable storage media, the storage media comprising clearinghouse server instructions executable by the processor for causing the server to:
send the clearinghouse token URL and the financial institution token URL;
redirect the customer's browser to a financial institution gateway using the clearinghouse token URL;
receive the financial institution token URL from the financial institution;
validate that the financial institution token URL received by the clearinghouse is the same as the financial institution token sent by the clearinghouse server;
send payment information to the financial institution;
receive payment notification from the financial institution;
send payment notification to the customer computer; and
send payment notification to the merchant server; and
the financial institution comprising a processor and tangible computer readable storage media, the storage media comprising financial institution instructions executable by the processor for causing the financial institution to:
receive the financial institution token URL from the customer computer;
send the financial institution token URL to the clearinghouse server;
receive payment information from the clearinghouse server;
receive a payment authorization from the customer computer; and
send payment notification to clearinghouse server and customer computer.

8. The system of claim 7 wherein the consumer computer instructions cause the computer to send a selected currency type and financial institution to the clearinghouse server.

9. The system of claim 7 or 8 wherein the clearinghouse server instructions cause the server to generate the clearinghouse token URL and the financial institution token URL.

10. The system of one of claims 7-9 wherein the clearinghouse server instructions cause the server to send, from the clearinghouse server, payment information to the financial institution.

11. Tangible computer readable storage media comprising:
customer computer readable media for a customer computer comprising a processor, the media comprising customer computer instructions executable by the processor for causing the computer to:
submit order data;
access a clearinghouse gateway using a token URL;
send a financial institution token URL to a financial institution; and
send a payment request;
merchant server computer readable media for a merchant server comprising a processor, the media comprising merchant server instructions executable by the processor for causing the server to:
send merchant credentials and order information to a clearinghouse server;
receive a clearinghouse token URL;
redirect a customer's browser to a clearinghouse gateway using the clearinghouse token URL;
clearinghouse server computer readable media for the clearinghouse server, the clearinghouse comprising a processor, the media comprising clearinghouse server instructions executable by the processor for causing the server to:
send the clearinghouse token URL and the financial institution token URL;
redirect the customer's browser to a financial institution gateway using the clearinghouse token URL;
receive the financial institution token URL from the financial institution;
validate that the financial institution token URL received by the clearinghouse server is the same as the financial institution token sent by the clearinghouse server;
send payment information to the financial institution;
receive payment notification from the financial institution;
send payment notification to the customer computer; and
send payment notification to the merchant server;
financial institution computer readable media for the financial institution, the financial institution comprising a processor, the media comprising financial institution; instructions executable by the processor for causing the computer to:
receive the financial institution token URL from the customer computer;
send the financial institution token URL to the clearinghouse server;
receive payment information from the clearinghouse server;
receive a payment authorization from the customer computer; and
send payment notification to clearinghouse server and customer computer.

12. The storage media of claim 11 wherein the consumer computer instructions comprises sending a selected currency type and financial institution to the clearinghouse server.

13. The storage media of claim 11 or 12 wherein the clearinghouse server instructions comprise generating the clearinghouse token URL and the financial institution token URL.

14. The storage media of one of claims 11-13 wherein the clearinghouse server comprises sending, from the clearinghouse server, payment information to the financial institution.
